Europäisches Patentamt

European Patent Office

Office européen des brevets

(11) Numéro de publication: **0 467 293 A1**

## (12) DEMANDE DE BREVET EUROPEEN

(21) Numéro de dépôt: **91111852.9**

(22) Date de dépôt: **16.07.91**

(51) Int. Cl.⁵: **G02B 6/44**

(30) Priorité: **19.07.90 FR 9009251**

(43) Date de publication de la demande:
**22.01.92 Bulletin 92/04**

(84) Etats contractants désignés:
**DE DK ES FR GB GR IT**

(71) Demandeur: **ALCATEL CABLE**
**30, rue des Chasses**
**F-92111 Clichy Cédex(FR)**

(72) Inventeur: **Marlier, Géry**
**60, rue Verte**
**F-62100 Calais(FR)**
Inventeur: **Libert, Jean-François**
**13, rue de Verdun, Condette**
**F-62360 Pont de Briques St Etienne(FR)**

(74) Mandataire: **Weinmiller, Jürgen et al**
**Lennéstrasse 9 Postfach 24**
**W-8133 Feldafing(DE)**

(54) Cable sous-marin de télécommunications à fibres optiques sous tube.

㊐ Le câble est à fibres optiques noyées dans un matériau de remplissage du tube, lui-même intérieur à un toron de fils métalliques à haute résistance mécanique dont les interstices sont remplis de matériau d'étanchéité (8).

Il est caractérisé en ce qu'il comporte une première gaine (4) extrudée entre le tube et le toron, que le toron est lui-même recouvert d'une deuxième gaine extrudée (7) isolante et résistante à l'abrasion, avec pour une liaison téléalimentée une bande conductrice (5) sur le tube (1) ou sur la première gaine (5).

Application : Télécommunication

FIG. 1

La présente invention concerne un câble sous-marin de télécommunications à fibres optiques, comprenant un tube contenant les fibres optiques noyées dans un matériau de remplissage, à l'intérieur d'un toron de fils métalliques à haute résistance mécanique.

On a déjà proposé dans le document AU-A-81304/87 un câble sous-marin de télécommunications comportant un tube en métal conducteur entourant des fibres optiques noyées dans un matériau remplissant l'intérieur du tube, un isolant électrique entourant le tube en métal conducteur, et au moins une couche de fils métalliques à résistance élevée à la traction entourant l'isolant, formant armure de protection. Un tel câble ne procure cependant pas une résistance suffisante aux possibilités d'infiltration et de propagation longitudinale d'eau, notamment en cas d'endommagement du câble immergé. En outre, les fils métalliques formant armure de protection peuvent être corrodés au contact de l'eau de mer par action bactérienne par exemple, ce phénomène de corrosion pourrait alors donner naissance à de l'hydrogène moléculaire pouvant dans certaines conditions migrer jusqu'au contact avec les fibres optiques occasionnant une dégradation des caractéristiques de transmission. En outre, le tube en métal conducteur contenant les fibres rend la structure coûteuse pour une liaison non téléalimentée, ou impose un module optique défini par le tube contenant les fibres qui soit différent selon que la liaison est téléalimentée ou non.

On connaît également, par le document EP-A-0 371 660, un câble sous-marin de télécommunications à fibres optiques sous tube de résistance, avec ce tube non affecté à la transmission d'énergie, pour permettre de conserver inchangée la partie centrale du câble, que celui-ci assure ou non la téléalimentation d'équipements répéteurs ou régénérateurs de la liaison définie. Ce câble comporte un diélectrique recouvrant le tube, une armure de résistance sur le diélectrique et une gaine externe de protection. Ce câble est le cas échéant muni d'une couche conductrice interne de téléalimentation, constituée par une couche de fils conducteurs, en cuivre ou en aluminium, interposée dans le diélectrique. Le diélectrique est alors réalisé en deux couches, et les conducteurs de téléalimentation en sandwich entre ces deux couches de diélectrique.

La présente invention a pour but de répondre à ce même but, avec une structure plus compacte et de réalisation simplifiée et de plus faible coût qui permet en outre de minimiser ou d'éliminer des concentrations de champ électrique qui risquent de la dégrader.

Le câble selon l'invention, comportant un tube de tenue mécanique du câble et de protection des fibres contenant les fibres optiques noyées dans un matériau de remplissage, un toron de fils métalliques à haute résistance mécanique autour dudit tube conférant avec ledit tube les caractéristiques mécaniques à la pression et à la traction du câble, une première gaine extrudée disposée entre le tube et le toron, un matériau d'étanchéité dans les interstices entre les fils à haute résistance mécanique du toron et une deuxième gaine extrudée résistante à l'abrasion entourant ledit toron, et comportant, en outre, pour une téléalimentation d'équipements interposés sur le câble, des moyens conducteurs internes interposés entre ladite armure et ledit tube contenant les fibres, est caractérisé en ce que lesdits moyens conducteurs sont constitués par une bande conductrice de section adaptée à la nature desdits équipements à alimenter, disposée en contact avec l'une des faces intérieure et extérieure de ladite première gaine et en ce que ladite deuxième gaine est en outre isolante électriquement.

Il répond en outre à au moins l'une des caractéristiques suivantes:

- il comporte une couche semiconductrice d'interface, entre le toron et la deuxième gaine extrudée, en matériau isolant chargé de particules conductrices,
- le matériau d'étanchéité est lui-même chargé de particules conductrices.

Les caractéristiques et avantages de la présente invention ressortiront de la description d'exemples de réalisation illustrés dans les dessins ci-annexés. Dans ces dessins :

- La figure 1 montre en coupe un câble selon la présente invention,
- Les figures 2 et 3 représentent en coupe deux variantes du câble de la figure 1.

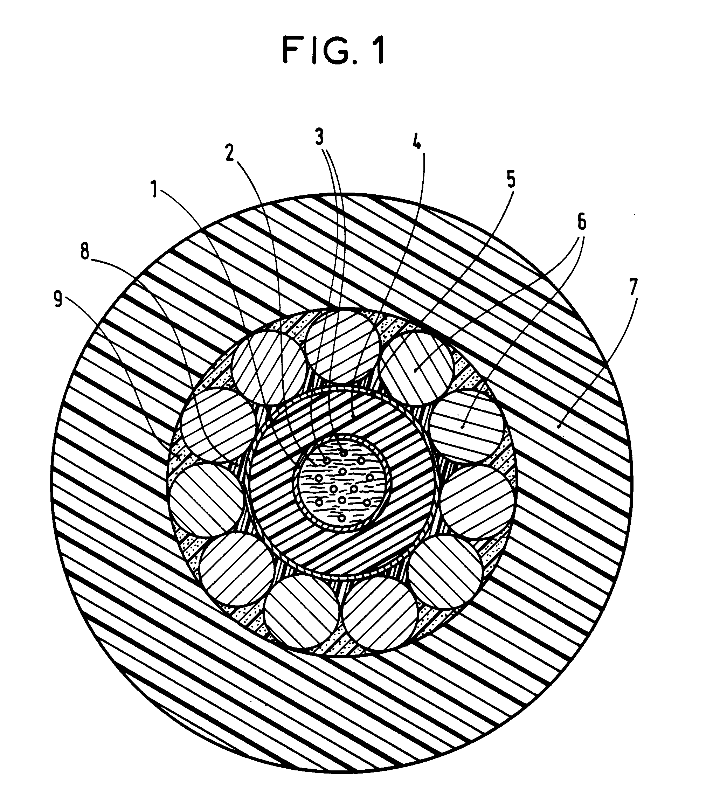

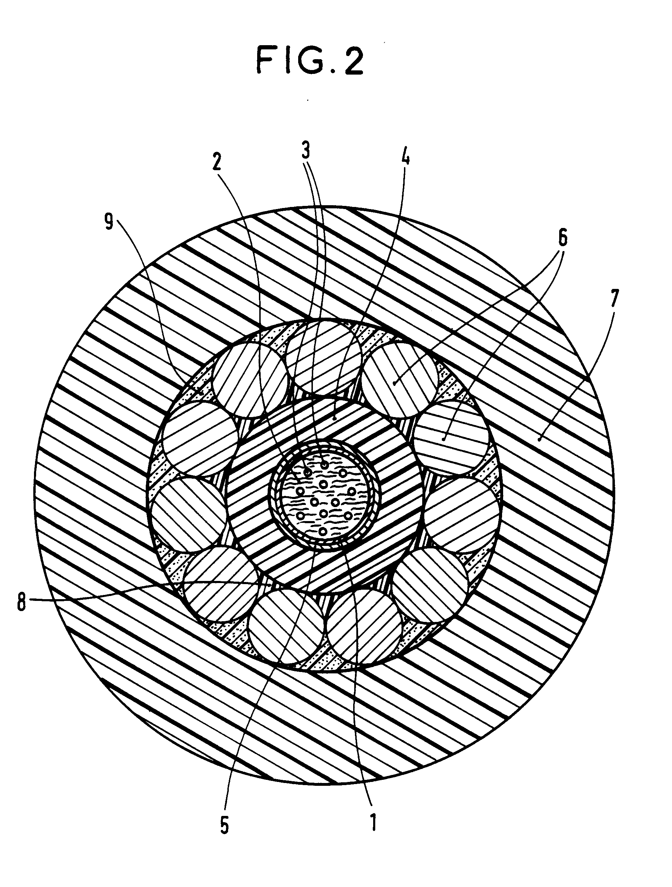

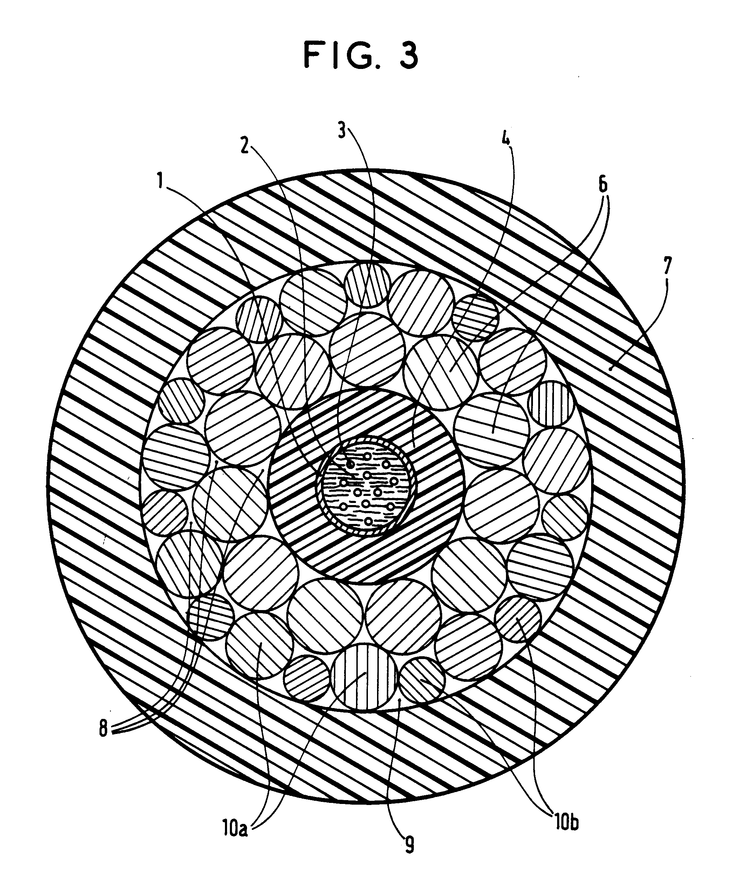

Dans ces figures, les mêmes références sont utilisées pour désigner les mêmes éléments ; le câble représenté dans la figure 1 est décrit en détail et seules les différences des variantes selon les figures 2 et 3, sont précisées.

Le câble représenté dans la figure 1 comporte un tube 1 rempli d'un compound d'étanchéité par exemple un gel de silice 2 dans lequel sont noyées des fibres optiques 3. Les fibres peuvent être câblées ou non et être en surlongueur ou non dans le tube.

Le tube 1 est métallique et résistant à la pression de l'eau, de préférence en acier. Il est soudé longitudinalement par laser, ou à l'arc sous gaz inerte, ou à l'arc plasma, ou toute autre méthode convenable. Ce tube 1 peut également être en matière plastique extrudée, avec dans ce cas des moyens, qui lui sont associés et précisés ci-après, conférant au câble une résistance suffisante à la pression.

Le câble comporte une première gaine extrudée 4 disposée autour du tube 1, le protégeant contre l'écrasement localisé ou la corrosion. Cette première gaine 4 est entourée d'une bande conductrice 5, en cuivre ou aluminium ou autre métal ou alliage très bon conducteur électrique, affectée à la téléalimentation de répéteurs amplificateurs ou régénérateurs interposés entre des tronçons de câble de la liaison sous-marine réalisée. La bande conductrice 5 est soudée longitudinalement en forme de tube entourant la première gaine ou est enroulée en hélice en une ou plusieurs couches sur cette première gaine ou encore constituée de feuillards préformés posés en long et assemblés autour de cette gaine.

Un toron de fils métalliques 6 à haute résistance mécanique, de préférence en acier, est disposé autour de la bande conductrice 5. Il est en une couche comme illustré, ou en plusieurs couches dans le même sens ou de sens opposés. Le toron de fils d'acier assure la résistance mécanique du câble à la traction. Il présente en outre les caractéristiques de voûte, en particulier pour un tube 1 en plastique de résistance à la pression insuffisante.

Les interstices entre les fils du toron et entre le toron et la bande 5 sont remplis d'un matériau d'étanchéité 8, tel qu'une résine polyuréthane ou d'un autre matériau pouvant assurer ce rôle d'étanchéité, s'opposant à une propagation longitudinale d'eau dans le câble, en particulier lors d'un éventuel endommagement du câble immergé.

Une deuxième gaine extérieure 7, en polyéthylène ou autre matériau isolant électrique et résistant à l'abrasion, est extrudée en une ou plusieurs couches sur le toron. Son épaisseur est fonction du degré d'isolation électrique et de la protection mécanique désirés.

La première gaine 4 réalise essentiellement un bourrage ramenant le câble résultant à un diamètre suffisant pour une tenue satisfaisante pour son utilisation en grande profondeur.

Avantageusement, comme illustré, une couche semiconductrice d'interface 9 est interposée entre la gaine extérieure 7 et le toron et remplit les interstices extérieurs entre les fils périphériques du toron et cette gaine 7. Cette couche 9 est très faiblement conductrice, elle est par exemple en polyéthylène chargé de particules conductrices en particulier de carbone. Un agent d'accrochage par exemple un copolymère est utilisé le cas échéant pour assurer l'adhérence de la couche semiconductrice 9 sur les fils du toron. La couche 9 permet d'éviter des concentrations de champs électriques intenses au niveau des aspérités, qui risquent d'endommager la gaine extérieure. La gaine extérieure 7 peut ainsi être d'épaisseur plus réduite.

En outre, avantageusement aussi, le matériau d'étanchéité 8 est lui-même chargé de particules conductrices, en particulier pour la bande conductrice 5 rubanée ou autre et non parfaitement lisse, pour éviter tout problème électrique à l'interface bande conductrice/toron.

Le câble représenté dans la figure 2 diffère de celui de la figure 1, en ce que sa bande conductrice 5 est disposée directement sur le tube 1 contenant les fibres optiques et est entourée par la première gaine extrudée 4. Dans ce cas la première gaine 4 peut ou non assurer une isolation électrique entre la bande conductrice 5 et les fils de l'armure de résistance.

On précise que dans ces deux exemples de réalisation, dans l'espace entre le toron de fils 6 et le tube 1, la bande conductrice 5 est d'épaisseur choisie pour l'obtention de la résistance électrique convenable et la première gaine extrudée 4 occupe alors l'espace restant.

En variante, non illustrée, par rapport aux câbles selon les figures 1 et 2, dans le cas d'une liaison non téléalimentée, le câble correspondant a le même module central défini par le tube 1 contenant les fibres noyées ; mais il est sans la bande conductrice 5 précitée recouverte par la première gaine 4 ou la recouvrant ni la couche semiconductrice d'interface précitée 9 entre le toron et la gaine extérieure 7. Ce câble est également à matériau d'étanchéité 8 dans les interstices entre le fils du toron, mais ce matériau est non chargé de particules conductrices.

Le câble représenté dans la figure 3 diffère de celui des figures 1 et 2, en ce qu'il est sans la bande conductrice 5 mais à toron comportant, en plus des fils 6 métalliques à haute résistance mécanique, une couche de préférence périphérique de fils conducteurs 10a, alternés avec des fils métalliques 10b à haute résistance mécanique et affectés à l'alimentation d'équipements régénérateurs de la liaison réalisée. Les interstices entre les fils du toron et entre le toron et le tube 1 sont remplis de matériau d'étanchéité, non illustré, éventuellement chargé de particules conductrices, et les interstices extérieurs entre les fils périphériques du toron d'une couche semiconductrice, non illustrée. Le module central défini par le tube 1 avec les fibres intérieures noyées reste également inchangé.

En regard des différents exemples de câbles décrits ci-avant, il apparaît que l'existence, la nature et les sections des moyens conducteurs peuvent être modifiées selon les besoins en téléalimentation du système, sans avoir à intervenir sur les autres parties constitutives du câble. La section de ces moyens conducteurs peut en particulier être nulle dans les systèmes sans répéteurs, réduite dans les systèmes avec amplificateurs optiques, ou normale dans les systèmes avec régénérateurs. La résistance du câble à l'hydrogène, à la pression, n'en n'est pas pour autant affectée.

## Revendications

1. Câble sous-marin de télécommunication à fibres optiques, comportant un tube (1) de tenue mécanique du câble et de protection des fibres contenant les fibres optiques (3) noyées dans un matériau de remplissage (2), un toron de fils métalliques (6) à haute résistance mécanique autour dudit tube (1) conférant avec ledit tube les caractéristiques mécaniques à la pression et à la traction du câble, une première gaine extrudée (4) disposée entre le tube et le toron, un matériau d'étanchéité (8) dans les interstices entre les fils à haute résistance mécanique (6) du toron, une deuxième gaine extrudée (7) résistante à l'abrasion entourant ledit toron, et comportant, en outre, pour une téléalimentation d'équipements interposés sur le câble, des moyens conducteurs (5) internes interposés entre ladite armure et ledit tube contenant les fibres, caractérisé en ce que lesdits moyens conducteurs sont constitués par une bande conductrice de section adaptée à la nature desdits équipements à alimenter, disposée en contact avec l'une des faces intérieure et extérieure de ladite première gaine (4) et en ce que ladite deuxième gaine (7) est en outre isolante électriquement.

2. Câble selon la revendication 1, caractérisé en ce que ladite bande conductrice (5) est disposée sur ledit tube (1) contenant les fibres et soudée longitudinalement ou enroulée en hélice en une ou plusieurs couches ou posée en long sur ledit tube, et est recouverte par ladite première gaine (4).

3. Câble selon la revendication 1, caractérisé en ce que ladite bande conductrice (5) est disposée sur ladite première gaine (4) et soudée longitudinalement ou enroulée en hélice en une ou plusieurs couches ou posée en long sur ladite première gaine (4), qui est directement extrudée sur ledit tube (1) contenant les fibres.

4. Câble selon l'une des revendications 1 à 3, caractérisé en ce qu'il comporte en outre une couche semiconductrice d'interface (9) entre le toron et ladite deuxième gaine extrudée (7), remplissant les interstices extérieurs entre les fils du toron et adhérant sur ces fils périphériques.

5. Câble selon la revendication 4, caractérisé en ce que ladite couche semiconductrice est une résine polyéthylène chargée de particules conductrices.

6. Câble selon l'une des revendications 1 à 5, caractérisé en ce que ledit matériau d'étanchéité (8) est chargé de particules conductrices.

7. Câble selon l'une des revendications 1 à 6, caractérisé en ce que ledit tube (1) contenant les fibres est métallique et résistant à la pression ou en plastique pour lequel ledit toron de fils métalliques de haute résistance mécanique (6) en au moins une couche forme voûte autour du tube en plastique.

# FIG. 1

# FIG.2

# FIG. 3

**Office européen
des brevets**

# RAPPORT DE RECHERCHE EUROPEENNE

Numéro de la demande

**EP 91 11 1852**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 278 835   (L.A. JACKSON)<br>* abrégé; figure 1 * * colonne 1, ligne 52 - colonne 2, ligne 16 * | 1-3 | G 02 B 6/44 |
| | – – – | | |
| D,A | EP-A-0 371 660   (T.C. STAMNITZ)<br>* abrégé; figures 1,1A * * colonne 16, ligne 25 - ligne 35 * * colonne 17, ligne 4 - ligne 10 * * colonne 17, ligne 26 - ligne 37 * * colonne 18, ligne 10 - ligne 25 * * colonne 19, ligne 30 - ligne 45 * | 1,3 | |
| | – – – | | |
| A | US-A-4 765 711   (D.L. OBST)<br>* le document en entier * | 4-7 | |
| | – – – – – | | |

**DOMAINES TECHNIQUES RECHERCHES (Int. Cl.5)**

G 02 B

Le présent rapport de recherche a été établi pour toutes les revendications

| Lieu de la recherche | Date d'achèvement de la recherche | Examinateur |
|---|---|---|
| La Haye | 11 septembre 91 | VAN DOREMALEN,J.C.H. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
-------------------------------------------------------------------
& : membre de la même famille, document correspondant